# EUROPEAN PATENT SPECIFICATION

(11) **EP 0 474 761 B1**
(45) Date of publication and mention of the grant of the patent: **30.11.1994**
(21) Application number: 90909216.5
(22) Date of filing: 18.05.1990
(51) Int. Cl.: B01J 23/84, B01D 53/36

(54) **CATALYST FOR HETEROGENEOUS CATALYSIS CONSISTING OF AN ALLOY OF TRANSITION METALS**
KATALYSATOR FÜR DIE HETEROGENE KATALYSE, DER AUS EINER LEGIERUNG VON ÜBERGANGSMETALLEN BESTEHT
CATALYSEUR POUR CATALYSE HETEROGENE, CONSTITUE D'UN ALLIAGE DE METAUX DE TRANSITION

(30) Priority: 30.05.1989 SE 8901938
(43) Date of publication of application: 18.03.1992
(73) Proprietor: BASF Aktiengesellschaft, 67063 Ludwigshafen (DE)
(72) Inventor: SOLBU, Erik, S-932 00 Skelleftehamn (SE)
(86) International application number: SE9000335
(87) International publication number: WO9014889

(56) References cited:
- EP-A- 0 264 647
- DE-A- 2 453 358
- DE-B- 2 360 724
- GB-B- 1 367 984
- GB-B- 1 477 407

## Description

The present invention relates to a catalyst of the kind used to effect chemical conversion by so-called heterogenous catalyzation, and more specifically causing a gaseous substance to react with a similar gaseous oxidizing agent or reduction agent on the surface of a solid catalyst which is, itself, a substance which actively takes part in the reaction by facilitating said reaction, although without being consumed itself. The presence of a catalyst may instigate reactions which would not otherwise take place or may cause reactions to be incomplete, or may result in end products which are faulty in some other way.

An illustrative example of a catalyzed oxidation reaction is the reaction of sulfur dioxide with oxygen. This reaction is employed on a large scale within the chemical industry in the manufacture of sulfuric acid, which constitutes one of the most important base chemicals in the chemical industry and for reasons of environmental care and protection, to prevent the emission of sulfur dioxide to atmosphere and after catalytic oxidation to sulfur trioxide with subsequent conversion to sulfuric acid to achieve an end product which has a market value.

The most common methods employed for the removal of sulfur dioxide from flue gases, is to react the sulfur dioxide with lime, with results in the production of large quantities of gypsum. The gypsum thus produced presents dumping problems, above all in densely-built areas in which the desulfurization of flue gases is employed.

An example of catalyzed reduction reactions is found in the reaction of oxides of nitrogen with ammonia. The ammonia is admixed with the gas at a temperature of between 300 and 400°C, and the hot mixture is then brought into contact with a solid catalyst which may be in the form of plates or have honeycomb construction, where the reduction process takes place. This reaction is employed to remove the oxides of nitrogen formed to a greater or lesser extent in combustion reactions where nitrogen is present. The reaction between the nitrogen oxides and the ammonia results in the formation of nitrogen and water, i.e. substances which can be safely released to atmosphere, as opposed to impure gases which when released to atmosphere cause damage to the surroundings in the form of acidification and excessive fertilization of ground and water.

Oxides of nitrogen, however, can also be caused to react directly with ammonia or other reduction agents at temperatures of about 1,000°C. However, since the reaction begins immediately the reduction agent is mixed with the gas, zones occur which contain either surplus or insufficient reduction agent, and the degree of purification achieved is not the same as that achieved with catalytic reduction.

It is essential in organic chemical industries where specific substances are produced by reactions across a catalyst that the catalyst will provide a high yield of the specific substance and that no secondary products are formed, or only small quantities of such products. This problem is of a minor nature in the aforegiven examples, although progressively more notice is being given to the problem concerned with the production of nitrous oxides in the reduction of nitrogen oxides.

Instead, endeavours have been directed in the aforesaid examples primarily to attempts to obtain a highly active catalyst, in other words, a catalyst with which the largest possible amount of material is converted per unit of time by the amount of catalyst used. This will allow the catalyst charge and the size of the reactor to be reduced, which affords significant economic advantages.

Endeavors are also made to obtain catalysts which are highly reactive at low temperatures, which in the case of the example concerning oxidation of sulfur dioxide can have the advantage of enabling a smaller heat-exchanger to be used for the purpose of bringing the gas to reaction temperature and to obtain a higher yield from reactions at lower temperature, as the result of a more favourable equilibrium.

Another factor to be observed in this context is the useful life of the catalyst, which is contingent on a number of factors. Among other things, the influence of temperature, dust, chemical substances and mechanical strain can poison, block, disintegrate or sinter the catalyst or its carrier substance. These catalyst impairments will change the properties of the catalyst, such as its activity and its activation temperature, and in the case of granular catalysts will result in an increased pressure drop through the bed, with the subsequent negative result of increasing operational costs and/or reduction in plant capacity.

It will be evident from the aforegoing that a number of different requirements are demanded on a good catalyst, namely:
- Low activation temperature.
- High activity per unit of area.
- Large active surface.
- Selectivity, i.e. the minimum formation of undesirable secondary products.
- Will not disintegrate or sinter at high temperatures.
- Is resistant to wear and pressure.
- Will not be influenced by dust or chemical impurities in the gas.
- Has a low pressure drop.

Whereas the latter property is partly contingent on the configuration of the catalyst used, e.g. a cylindrical, circular, plate-like or honeycomb configuration, the remaining properties are contingent on the construction and composition of the catalyst with regard to both the active substance and, when found, carrier material, and also on the relative size and specific properties of the active surface.

A catalyst for heterogenic catalyzation may include one or more active substances, and transition metals in particular have been found to have good catalytic properties in the most widely separated contexts in respect of both organic and inorganic reactions. For instance, pure metals or alloyed metals from this group, optionally placed on a carrier, are used for the oxidation of ammonia to nitrogen oxides, for cleansing exhaust gases from petrol engines, for oxidizing sulfur dioxide to sulful trioxide, and for hydration and dehydration processes within the petrochemical industry.

For instance, oxides of one or more transition metals, optionally placed on a carrier, are used in the desulfurization (hydration) of petroleum products, ammonia synthesis and in the production of formaldehyde. Even when the catalyst is essentially in metal form, the active surface can still nevertheless consist of a thin oxide layer which is responsible for the catalytic activity.

Those transition metals found to have particularly useful catalytic properties are the platinum-group metals, although endeavors have been made to substitute these metals with other substances, because of the high prices of such metals. In this regard, transition metals in the fourth group of the periodic table have primarily obtained an important significance, and not solely in metal form but also in the form of alloys and oxides.

The object of the present invention is to provide a catalyst which includes an alloy of different transission metal in the absence of appreciable amounts of platinum-group metals and which will nevertheless fulfill the aforesaid requirements asked of a good catalyst and which is equally as good as a known catalyst found to have catalytic properties and comprising alloys of different transition metal. As examples of such known alloys can be mentioned:
- Stainless steel rings doped in diluted sulfuric acid. These rings have been found to function as catalysts in the reduction of nitrogen monoxide with ammonia.
- Preactivated stainless steel rings have been used as catalysts in the reduction of sulfur dioxide to elementary sulfur.
- When sampling combustion gas through a stainless steel tube, it has been observed that the oxides of nitrogen are reduced by carbon monoxide so as to form nitrogen and carbon dioxide.
- A catalyst comprising one or more of the substances Cr, Mo, Co, Ni and Cu bar been found somewhat useful for a cleansing vehicle exhaust gases from carbon monoxide, nitrogen oxides and hydrocarbons.
- A catalyst which comprises in percent by weight Cr 23, Ni 18, Mo 2, C 0,5 and Fe 56,5 has been used for the oxidation of ammonia to nitrogen monoxide.

Examples of catalysts belonging to the penultimate group of the above-listed alloys can be found in DE-A-24 53 358 and DE-B-23 60 724. In DE-A-24 53 358 the described catalyst has as its main components chromium and copper, or chromium, copper and nickel. It shall be noted that the copper content shall be at least 7 per cent. In fact, the copper content is essentially higher than 7 per cent in all the given examples, mostly in the range of 35 to 50 per cent. Among several other additional elements it is also indicated that the catalyst may include 0 to 5 per cent vanadium. In DE-B-23 60 724 is described a catalyst comprising chromium, copper and/or nickel. Also in this catalyst copper is the dominating element, with a content of 20 to 50 per cent. This catalyst also includes at least one of a number of different elements, such as vanadium, in the range of 0,1 to 5 per cent.

The object of the invention is realized by the inventive catalyst having the characteristic features defined in the following claims, and more specifically characterized in that it includes complex alloys of at least some of the following alloying components, namely V, Cr, Mn, Fe, Co, Ni, Mo and Si at low carbon contents, preferably the smallest possible carbon contents. It has surprisingly been found that at least with regard to the reduction of nitrogen oxides with ammonia, the inventive catalyst exhibits a greater activity than the aforesaid alloys which have been found to possess certain catalytic properties, and even greater than known, commercially available flue-gas catalysts which consist of vanadium pentoxide disposed on a carrier, and this even with a substantially lower content of vandadium in the inventive catalyst than in the known flue-gas catalysts.

The reason for this unexpected high activity is assumed to lie in the coaction between the various alloying components, each of which is able to adopt, individually, different oxidation states between which said components change during the reaction processes. Because the transitions between the oxidation states of these different metals have different redox potentials, reactions promoted by the transitions which have the highest redox potentials can be made easier.

Because the inventive catalyst has a composition similar to that of stainless steel, the inventive catalyst is highly stable against degradation, sintering, chemical influence and the influence of temperature, in addition to possessing a low activation temperature and high activity.

The inventive catalyst includes an alloy of a plurality of transition metals and comprises at least vanadium, nickel and chromium and preferably, but not necessarily, also one or more of the following metals: molybdenum, manganese, silicon, iron and cobalt, with the least possible carbon content. Expressed in percent by weight, the proportions in which said metals are present may be: vanadium 5-20, preferably between 5 and 15; chromium 5-30, preferably between 15 and 25; nickel 10-40, preferably between 15 and 30; manganese 0-10, preferably between 3 and 8; iron 0-40, preferably between 20 and 30; cobalt 0-20, preferably between 5 and 15; molybdenum 0-10, preferably between 3 and 8; silicon 0-10, preferably between 0 and 5. The carbon content of the inventive catalyst will be at most 0.1 percent by weight, and preferably 0.06 percent by weight. A number of examples are described below.

### Example 1

An inventive catalyst of the following composition, expressed in percent by weight, namely V 8.9; Cr 21.5; Mn 4.68; Fe balance (approximately 25); Co 10.6; Ni 22.6; Mo 4.9; Si 2.1; C 0.055; and a specific surface of 0.1 m²/g was used to reduce chemically 560 ppm in a gas containing 730 ppm of NH₃. The catalyst had a pronounced activity at a temperature as low as 160°C, and the activity per unit of surface area within the investigated temperature range was more than three times that of a catalyst consisting of 20 percent V₂O₅ on SiO₂ - TiO₂.

### Example 2

100 g of alloy according to Example 1 was alloyed with 50 g Al and the new alloy was leached in a warm NaOH-solution until the generation of hydrogen-gas ceased. The resultant sample had a specific surface area of 63 m²/g and was tested for the chemical reduction of 600 ppm NO with 700 ppm of NH₃. Activities per unit of surface area corresponding to those in Example 1 were achieved subsequent to having activated the surface at a temperature of about 350°C.

### Example 3

A study was carried out a catalyst according to Example 2 which had been coated with soot and the soot combusted to carbon monoxide and then to carbon dioxide. The activity per unit of surface area in both of these part reactions and in the total reaction was found to be comparable with the results achieved with catalysts that comprised V₂O₅ on Al₂O₃ and including CuO on Al₂O₃.

The surface of the catalyst can be enlarged, by alloying with a lightmetal, e.g. aluminium, with subsequent electrolytic dissolution of the lightmetal.

## Claims

1. A catalyst intended preferably for heterogenous gas-phase reactions of the kind in which a substance is reduced or oxidized and comprising an alloy of a plurality of transition metals, **characterized** in that the alloy comprises vanadium, nickel and chromium, whereby the proportion of vanadium is 5-20 per cent by weight, the proportion of nickel is 10-40 per cent by weight and the proportion of chromium is 5-30 per cent by weight, that the alloy also includes one or more of the following metals: molybdenum with 0-10 per cent by weight, manganese with 0-10 per cent by weight, silicon with 0-10 per cent by weight, iron with 0-40 per cent by weight and cobalt with 0-20 per cent by weight, with the least possible carbon content, viz. maximum 0,1 per cent by weight, and that the alloy is free from any significant amounts of copper.

2. A catalyst according to claim 1, **characterized** in that the vanadium is present in a proportion of between 5 and 15 per cent by weight.

3. A catalyst according to any one of claims 1-2, **characterized** in that nickel is present in a proportion of between 15 and 30 per cent by weight.

4. A catalyst according to any one of claims 1-3, **characterized** in that chromium is present in a proportion of between 15 and 25 per cent by weight.

5. A catalyst to any one of claims 1-4, **characterized** in that manganese is present in a proportion of between 3 and 8 per cent by weight.

6. A catalyst according to any of claims 1-5, **characterized** in that iron is present in a proportion of between 20 and 30 per cent by weight.

7. A catalyst according to any one of claims 1-6, **characterized** in that cobalt is present in a proportion of between 5 and 15 per cent by weight.

8. A catalyst according to any one of claims 1-7, **characterized** in that molybdenum is present in a proportion of between 3 and 8 per cent by weight.

9. A catalyst according to any one of claims 1-8, **characterized** in that silicon is present in a proportion of between 0 and 5 per cent by weight.

10. A catalyst according to any one of claims 1-9, **characterized** in that the carbon content of the catalyst is at most 0,06 per cent by weight.

11. A catalyst according to any one of claims 1-10, **characterized** in that the catalyst has a specific surface area which has been enlarged by mechanical disintegration.

12. A catalyst according to any one of claims 1-10, **characterized** in that the catalyst has a specific surface area which has been enlarged by admixing a component therewith and then removing said component.

13. A catalyst according to any one of claims 1-10 and 12, **characterized** in that the specific surface area of the catalyst has been enlarged by alloying the catalyst with a lightmetal and subjecting the catalyst to a subsequent leaching process.

14. A catalyst according to claim 13, **characterized** in that the specific surface area of the catalyst has been enlarged by alloying the catalyst with aluminium and subsequently leaching with caustic liquor.

15. A catalyst according to any one of claims 1-10 and 14, **characterized** in that the specific surface area of the catalyst has been enlarged by alloying with a lightmetal and subsequent electrolytic dissolution of the lightmetal.

16. A catalyst according to claim 15, **characterized** in that the specific surface area of the catalyst has been enlarged by alloying with aluminium with subsequent electrolytic dissolution of the aluminium.

17. Use of the catalyst in accordance with any one of claims 1-16 for heterogenous gas-phase reactions of the kind in which a substance is reduced or oxidized.

## Patentansprüche

1. Katalysator, welcher vorzugsweise für derartige heterogene Gasphasenreaktionen vorgesehen ist, in welchen eine Substanz reduziert oder oxidiert wird, und umfassend eine Legierung einer Mehrzahl von Übergangsmetallen,
dadurch gekennzeichnet,
daß die Legierung wenigstens Vanadium, Nickel und Chrom umfaßt, wobei der Vanadiumanteil 5-20 Gew.-% ist, der Nickelanteil 10-40 Gew.-% ist und der Chromanteil 5-30 Gew.-% ist,
daß die Legierung ferner eines oder mehrere der folgenden Metalle umfaßt: Molybdän mit 0-10 Gew.-%, Mangan mit 0-10 Gew.-%, Silicium mit 0-10 Gew.-%, Eisen mit 0-40 Gew.-% und Kobalt mit 0-20 Gew.-%, mit dem kleinstmöglichen Kohlenstoffgehalt, nämlich maximal 0,1 Gew.-%, und
daß die Legierung frei von signifikanten Kupfermengen ist.

2. Katalysator nach Anspruch 1,
dadurch gekennzeichnet,
daß Vanadium in einem Anteil von zwischen 5 und 15 Gew.-% vorhanden ist.

3. Katalysator nach einem der Ansprüche 1 bis 2,
dadurch gekennzeichnet,
daß Nickel in einem Anteil von zwischen 15 und 30 Gew.-% vorhanden ist.

4. Katalysator nach einem der Ansprüche 1 bis 3,
dadurch gekennzeichnet,
daß Chrom in einem Anteil von zwischen 15 und 25 Gew.-% vorhanden ist.

5. Katalysator nach einem der Ansprüche 1 bis 4,
dadurch gekennzeichnet,
daß Mangan in einem Anteil von zwischen 3 und 8 Gew.-% vorhanden ist.

6. Katalysator nach einem der Ansprüche 1 bis 5,
dadurch gekennzeichnet,
daß Eisen in einem Anteil von zwischen 20 und 30 Gew.-% vorhanden ist.

7. Katalysator nach einem der Ansprüche 1 bis 6,
dadurch gekennzeichnet,
daß Kobalt in einem Anteil von zwischen 5 und 15 Gew.-% vorhanden ist.

8. Katalysator nach einem der Ansprüche 1 bis 7,
dadurch gekennzeichnet,
daß Molybdän in einem Anteil von zwischen 3 und 8 Gew.-% vorhanden ist.

9. Katalysator nach einem der Ansprüche 1 bis 8,
dadurch gekennzeichnet,
daß Silicium in einem Anteil von zwischen 0 und 5 Gew.-% vorhanden ist.

10. Katalysator nach einem der Ansprüche 1 bis 9,
dadurch gekennzeichnet,
daß der Kohlenstoffgehalt des Katalysators höchstens 0,06 Gew.-% ist.

11. Katalysator nach einem der Ansprüche 1 bis 10,
dadurch gekennzeichnet,
daß der Katalysator einen wirksamen Oberflächenbereich aufweist, welcher durch mechanisches Abtragen vergrößert worden ist.

12. Katalysator nach einem der Ansprüche 1 bis 10,
dadurch gekennzeichnet,
daß der Katalysator einen wirksamen Oberflächenbereich aufweist, welcher durch Zumischen einer Komponente zu diesem und dann Entfernen der Komponente vergrößert worden ist.

13. Katalysator nach einem der Ansprüche 1 bis 10 und 12,
dadurch gekennzeichnet,
daß der wirksame Oberflächenbereich des Katalysators durch Legieren des Katalysators mit einem Leichtmetall und einem darauf folgenden Aussetzen des Katalysators einem Auslaug-Verfahren vergrößert worden ist.

14. Katalysator nach Anspruch 13,
dadurch gekennzeichnet,
daß der wirksame Oberflächenbereich des Katalysators durch Legieren des Katalysators mit Aluminium und nachfolgendem Auslaugen mit ätzender Lauge vergrößert worden ist.

15. Katalysator nach einem der Ansprüche 1 bis 10 und 14,
dadurch gekennzeichnet,
daß der wirksame Oberflächenbereich des Katalysators durch Legieren mit einem Leichtmetall und nachträgliches elektrolytisches Auflösen des Leichtmetalls vergrößert worden ist.

16. Katalysator nach Anspruch 15,
dadurch gekennzeichnet,
daß der wirksame Oberflächenbereich des Katalysators durch Legieren mit Aluminium mit nachfolgendem elektrolytischem Auflösen des Aluminiums vergrößert worden ist.

17. Verwendung des Katalysators nach einem der Ansprüche 1 bis 16 für derartige heterogene Gasphasenreaktionen, bei welchen eine Substanz reduziert oder oxidiert wird.

## Revendications

1. Catalyseur destiné, de préférence, à des réactions hétérogènes en phase gazeuse du type où une substance est réduite ou oxydée et comprenant un alliage d'un certain nombre de métaux de transition, caractérisé en ce que l'alliage contient du vanadium, du nickel et du chrome où la proportion de vanadium est de 5-20% en poids, la proportion de nickel est de 10-40% en poids et la proportion de chrome est de 5-30% en poids et en ce que l'alliage inclut également un ou plusieurs des métaux suivants : molybdène avec 0-10% en poids, manganèse avec 0-10% en poids, silicium avec 0-10% en poids, fer avec 0-40% en poids et cobalt avec 0-20% en poids, avec la plus faible teneur en carbone possible, nommément 0,1% en poids maximum et en ce que l'alliage est exempt de toute quantité significative de cuivre.

2. Catalyseur selon la revendication 1, caractérisé en ce que le vanadium est présent à une proportion comprise entre 5 et 15% en poids.

3. Catalyseur selon la revendication 1 ou 2, caractérisé en ce que le nickel est présent à une proportion comprise entre 15 et 30% en poids.

4. Catalyseur selon l'une quelconque des revendications 1 à 3, caractérisé en ce que le chrome est présent à une proportion comprise entre 15 et 25% en poids.

5. Catalyseur selon l'une quelconque des revendications 1 à 4, caractérisé en ce que le manganèse est présent à une proportion comprise entre 3 et 8% en poids.

6. Catalyseur selon l'une quelconque des revendications 1 à 5, caractérisé en ce que le fer est présent à une porportion comprise entre 20 et 30% en poids.

7. Catalyseur selon l'une quelconque des revendications 1 à 6, caractérisé en ce que le cobalt est présent à une proportion comprise entre 5 et 15% en poids.

8. Catalyseur selon l'une quelconque des revendications 1 à 7, caractérisé en ce que le molybdène est présent à une proportion comprise entre 3 et 8% en poids.

9. Catalyseur selon l'une quelconque des revendications 1 à 8, caractérisé en ce que le silicium est présent à une proportion comprise entre 0 et 5% en poids.

10. Catalyseur selon l'une quelconque des revendications 1 à 9, caractérisé en ce que la teneur en carbone du catalyseur est au plus de 0,06% en poids.

11. Catalyseur selon l'une quelconque des revendications 1 à 10, caractérisé en ce que le catalyseur a une aire superficielle spécifique qui a été agrandie par désintégration mécanique.

12. Catalyseur selon l'une quelconque des revendications 1 à 10, caractérisé en ce que le catalyseur a une aire superficielle spécifique qui a été agrandie par mélange d'un composant puis élimination dudit composant.

13. Catalyseur selon l'une quelconque des revendications 1 à 10 et 12, caractérisé en ce que l'aire superficielle spécifique du catalyseur a été agrandie par alliage du catalyseur avec un métal léger et en soumettant le catalyseur à un procédé subséquent de lixiviation.

14. Catalyseur selon la revendication 13, caractérisé en ce que l'aire superficielle spécifique du catalyseur a été agrandie par alliage du catalyseur avec de l'aluminium et lixiviation subséquente avec une liqueur caustique.

15. Catalyseur selon l'une quelconque des revendications 1 à 10 et 14, caractérisé en ce que l'aire superficlelle spécifique du catalyseur a été agrandie par alliage avec un métal léger et dissolution électrolytique subséquente du métal léger.

16. Catalyseur selon la revendication 15, caractérisé en ce que l'aire superficielle spécifique du catalyseur a été agrandie par alliage avec de l'aluminium avec dissolution électrolytique subséquente de l'aluminium.

17. Utilisation du catalyseur selon l'une quelconque des revendications 1 à 16, pour des réactions hétérogènes en phase gazeuse du type où une substance est réduite ou oxydée.
